# EUROPEAN PATENT SPECIFICATION

(11) **EP 3 913 881 B1**
(45) Date of publication and mention of the grant of the patent: **31.07.2024**
(21) Application number: 20175815.8
(22) Date of filing: 20.05.2020
(51) Int. Cl.: H04L 69/04, H04L 69/22, H04W 12/00, H04W 28/06, H04W 88/08

(54) **HEADER COMPRESSION MANAGEMENT IN A RADIO ACCESS NETWORK**
VERWALTUNG DER HEADER-KOMPRESSION IN EINEM FUNKZUGANGSNETZWERK
GESTION DE COMPRESSION D'EN-TÊTE DANS UN RÉSEAU D'ACCÈS RADIO

(43) Date of publication of application: 24.11.2021
(73) Proprietor: Nokia Solutions and Networks Oy, 02610 Espoo (FI)
(72) Inventor: GODIN, Philippe, Versailles (FR)
(74) Representative: Script IP Limited

(56) References cited:
- WO-A1-2019/244793
- WO-A2-2010/048621
- NEC: "(TP for NR BL CR for TS 38.463): discussion on security algorithms and ROHC profile for CP and UP separation", vol. RAN WG3, no. Gothenburg, Sweden; 20180820 - 20180824, 10 August 2018 (2018-08-10), XP051528071, Retrieved from the Internet <URL:http://www.3gpp.org/ftp/tsg%5Fran/WG3%5FIu/TSGR3%5F101/Docs/R3%2D184724%2Ezip> [retrieved on 20180810]

## Description

### TECHNOLOGICAL FIELD

Examples of the present disclosure relate to header compression in a Radio Access Network. Some examples relate to Ethernet header compression and IP header compression management in a Next Generation Radio Access Network.

### BACKGROUND

5th Generation (5G) New Radio (NR) enables a User Equipment (UE) and a Next Generation Radio Access Network (NG-RAN) node to perform header compression, e.g. Ethernet Header Compression (EHC) or RObust Header Compression (ROHC), such as may be used for Industrial Internet Of Things (IOT).

An NG-RAN node, such as a gNodeB (gNB), may have a disaggregated (or distributed) architecture comprising a Central Unit (CU) and a separate one or more Distributed Units (DU), wherein the CU may be further separated into a Control Plane (CP) part and one or more User Plane (UP) parts. In such a disaggregated gNB, the gNB CU-CP may receive a Packet Data Unit (PDU) Session Setup over an NG interface from the 5G Core (5GC). This may inform the gNB CU-CP about the type of packet data units conveyed by the PDU session, such as Ethernet frames or IP datagrams. The gNB CU-CP, when setting up a Data Radio Bearer (DRB) at the gNB CU-UP to be associated with a User Equipment (UE), may send, via an E1 Application Protocol (AP) Bearer Context Setup, header compression parameters necessary to enable the gNB CU-UP to perform header compression, for instance IP header compression parameters or Ethernet header compression parameters. After the gNB CU-CP has sent the compression parameters to the gNB CU-UP, the gNB CU-CP then sends the corresponding header compression parameters to the UE. The gNB CU-UP and UE, when connected via the DRB, may thereby transfer data packets between each other and perform compression (and decompression) of the headers of the Ethernet frames or IP datagrams of the PDU session.

Current conventional management of header compression may suffer from scalability and flexibility issues. Since a gNB CU-UP may be associated with several gNB DU's, and each gNB DU may itself be associated with many UE's, a gNB CU-UP may be associated with many UE's. Performing header compression/de-compression is resource intensive. However, gNB CU-UP may have finite resources and a limited capacity for performing header compression. In view of this, upon receiving the header compression parameters from the gNB CU-CP during the bearer context setup procedure, the gNB CU-UP may decide it is unable to perform the header compression, e.g. due its loading/capacity limit for performing the same having been reached (i.e. overload situation). In current conventional systems, the gNB CU-CP is not made aware of any decision of the gNB CU-UP in this regard. Therefore, the gNB CU-CP may end up sending header compression parameters to the UE even though the gNB CU-UP is unable to perform the header compression. This may result in a desynchronization between the UE and gNB CU-UP with regards to header compression. This may also result in redundant signalling of header compression parameters to the UE and needless configuration of the UE with useless header compression contexts.

WO2019244793 A1 discloses a communication system in which a distributed base station apparatus comprises a central unit for control plane signalling (CU-CP), at least one a central unit for user plane signalling (CU-UP), and at least one distributed unit. The CU-CP obtains information indicating whether a security configuration is supported by a CU-UP and selects a security configuration for an item of user equipment (UE) based on the obtained information.

NEC, "(TP for NR BL CR for TS 38.463): discussion on security algorithms and ROHC profile for CP and UP separation", vol. RAN WG3, no. Gothenburg, Sweden; 20180820 - 20180824, (20180810), 3GPP DRAFT; R3-184724, discusses an issue of mismatch between security algorithms and/or ROHC profiles that are configured by a gNB-CU-CP and those supported by a gNB-CU-UP. This document discloses the following proposals: Proposal 1: The gNB-CU-UP should respond to the gNB-CU-CP with a BEARER CONTEXT SETUP FAILURE message and appropriate cause value, if it cannot support the ROHC profile or security algorithms sent in the BEARER CONTEXT SETUP REQUEST message. Proposal 2: The gNB-CU-UP should respond to the gNB-CU-CP with a BEARER CONTEXT MODIFICATION FAILURE message and appropriate cause value, if it cannot support the ROHC profile or security algorithms sent in the BEARER CONTEXT MODIFICATION REQUEST message.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

Certain examples of the disclosure may seek to provide improved management of header compression by taking into account dynamic criteria, such as a gNB CU-UP's ability to perform header compression, e.g. by taking into account the gNB CU-UP's header compression load/capacity for performing header compression. Certain examples seek to provide improved flexibility with regards to the use of two types of header compression, e.g. EHC and/or IP header compression, when a node of a disaggregated NG-RAN is not able to perform one or both of such types of header compression.

### BRIEF SUMMARY

The scope of protection sought for various embodiments of the invention is set out by the independent claims. Any examples/embodiments and features described in this specification that do not fall under the scope of the independent claims are to be interpreted as examples useful for understanding various embodiments of the invention.

According to various, but not necessarily all, embodiments there is provided a Control Plane Radio Access Network node, CP-RAN node, of a Central Unit, CU, of a disaggregated RAN node, wherein the CU comprises at least the CP-RAN node and a User Plane, UP, RAN node; the CP-RAN node comprising:
means for receiving, from the UP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
means for sending configuration information for the at least one type of header compression to a User Equipment, UE, based in part on the respective at least one status.

According to various, but not necessarily all, embodiments there is provided a method for use in a Control Plane Radio Access Network node, CP-RAN node, of a Central Unit, CU, of a disaggregated RAN node, wherein the CU comprises at least the CP-RAN node and a User Plane, UP, RAN node; the method comprising:
receiving, from the UP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
sending configuration information for the at least one type of header compression to a User Equipment, UE, based in part on the respective at least one status.

According to various, but not necessarily all, embodiments there is provided a computer program that, when run on a processor of a Control Plane Radio Access Network node, CP-RAN node, of a Central Unit, CU, of a disaggregated RAN node, wherein the CU comprises at least the CP-RAN node and a User Plane, UP, RAN node, at least performs:
receiving, from the UP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
sending configuration information for the at least one type of header compression to a User Equipment, UE, based in part on the respective at least one status.

According to various, but not necessarily all, embodiments there is provided a Control Plane Radio Access Network node, CP-RAN node, of a Central Unit, CU, of a disaggregated RAN node, wherein the CU comprises at least the CP-RAN node and a User Plane, UP, RAN node; the CP-RAN node comprising:
at least one processor; and
at least one memory including computer program code;
the at least one memory and the computer program code configured to, with the at least one processor, cause the CP-RAN node at least to perform:
   receiving, from the UP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
   sending configuration information for the at least one type of header compression to a User Equipment, UE, based in part on the respective at least one status.

According to various, but not necessarily all, embodiments there is provided a non-transitory computer readable medium comprising program instructions for causing a Control Plane Radio Access Network node, CP-RAN node, of a Central Unit, CU, of a disaggregated RAN node, wherein the CU comprises at least the CP-RAN node and a User Plane, UP, RAN node, at least to perform:
receiving, from the UP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
sending configuration information for the at least one type of header compression to a User Equipment, UE, based in part on the respective at least one status.

According to various, but not necessarily all, embodiments there is provided a User Plane Radio Access Network node, UP-RAN node, of a Central Unit, CU, of a disaggregated RAN node, wherein the CU comprises at least the UP-RAN node and a Control Plane, CP, RAN node; the UP-RAN node comprising:
means for sending, to the CP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

According to various, but not necessarily all, embodiments there is provided a method for use in a User Plane Radio Access Network node, UP-RAN node, of a Central Unit, CU, of a disaggregated RAN node, wherein the CU comprises at least the UP-RAN node and a Control Plane, CP, RAN node; the method comprising:
sending, to the CP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

According to various, but not necessarily all, embodiments there is provided a computer program that, when run on a processor of a User Plane Radio Access Network node, UP-RAN node, of a Central Unit, CU, of a disaggregated RAN node, wherein the CU comprises at least the UP-RAN node and a Control Plane, CP, RAN node, at least performs:
sending, to the CP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

According to various, but not necessarily all, embodiments there is provided a User Plane Radio Access Network node, UP-RAN node, of a Central Unit, CU, of a disaggregated RAN node, wherein the CU comprises at least the UP-RAN node and a Control Plane, CP, RAN node; the UP-RAN node comprising:
at least one processor; and
at least one memory including computer program code;
the at least one memory and the computer program code configured to, with the at least one processor, cause the UP-RAN node at least to perform:
   sending, to the CP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

According to various, but not necessarily all, embodiments there is provided a non-transitory computer readable medium comprising program instructions for causing a User Plane Radio Access Network node, UP-RAN node, of a Central Unit, CU, of a disaggregated RAN node, wherein the CU comprises at least the UP-RAN node and a Control Plane, CP, RAN node, at least to perform:
sending, to the CP-RAN node, at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

### BRIEF DESCRIPTION OF THE DRAWINGS

For a better understanding of various examples of the present disclosure that are useful for understanding the detailed description and certain examples of the present disclosure, reference will now be made by way of example only to the accompanying drawings in which:
FIG. 1 schematically illustrates an example of a wireless communication network suitable for use with examples of the present disclosure;
FIG. 2 schematically illustrates an example of a disaggregated RAN node;
FIG. 3 schematically illustrates an example of a method according to the present disclosure;
FIG. 4 schematically illustrates an example of a further method according to the present disclosure;
FIG. 5 schematically illustrates an example of signalling between a disaggregated RAN node, UE and 5GC according to the present disclosure;
FIG. 6 schematically illustrates a further example of signalling between a disaggregated RAN node, UE and 5GC according to the present disclosure;
FIG. 7 schematically illustrates a yet further example of signalling between a disaggregated RAN node, UE and 5GC according to the present disclosure;
FIG. 8 schematically illustrates an example of an apparatus according to the present disclosure; and
FIG. 9 schematically illustrates an example of a computer program according to the present disclosure.

The figures are not necessarily to scale. Certain features and views of the figures may be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### LIST OF ABBREVIATIONS

- 5G: 5^{th} Generation
- AP: Application Protocol
- CU: Central Unit
- CP: Control Plane
- CU-CP: Central Unit Control Plane
- CU-UP: Central Unit User Plane
- DRB: Data Radio Bearer
- DU: Distributed Unit
- EHC: Ethernet Header Compression
- gNB: gNodeB
- IE: Information Element
- NG: Next Generation
- NG-RAN: Next Generation Radio Access Network
- NR: New Radio/Next Radio
- PDU: Packet Data Unit
- RAN: Radio Access Network
- ROHC: RObust Header Compression
- RRC: Radio Resource Control
- UE: User Equipment
- UP: User Plane

### DETAILED DESCRIPTION

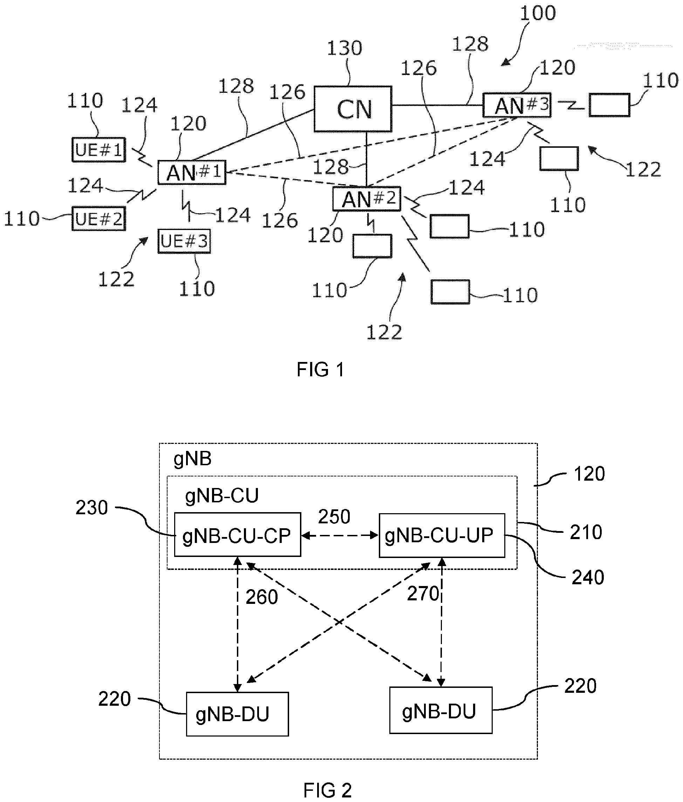

FIG.1 schematically illustrates an example of a network 100 comprising a plurality of network nodes including terminal nodes 110 (also referred to as User Equipment), access nodes 120 (also referred to as RAN nodes), and core network 130.

The terminal nodes 110 and access nodes 120 communicate with each other. The core network 130 communicates with the access nodes 120. One or more core nodes of the core network 130 may, in some but not necessarily all examples, communicate with each other. The one or more access nodes 120 may, in some but not necessarily all examples, communicate with each other.

The network 100 may be a cellular network comprising a plurality of cells 122 each served by an access node 120. The interfaces between the terminal nodes 110 and the access nodes 120 are radio interfaces 124. The access nodes 120 comprise cellular radio transceivers. The terminal nodes 110 comprise cellular radio transceivers.

In the particular example illustrated, the network 100 is a Next Generation (or New Radio, NR) network. New Radio is the Third Generation Partnership Project (3GPP) name for 5G technology. The terminal nodes 110 are also known as User Equipment (UE).

Depending on the exact deployment scenario, the access nodes 120 can be RAN nodes such as NG-RAN nodes. NG-RAN nodes may be gNodeBs (gNBs) that provide NR user plane and control plane protocol terminations towards the UE. NG-RAN nodes may be New Generation Evolved Universal Terrestrial Radio Access network (E-UTRAN) NodeBs (ng-eNBs) that provide E-UTRA user plane and control plane protocol terminations towards the UE. The gNBs and ng-eNBs may be interconnected with each other by means of Xn interfaces. The gNBs and ng-eNBs are also connected by means of NG interfaces to the 5GC, more specifically to the AMF (Access and Mobility Management Function) by means of the NG-C interface and to the UPF (User Plane Function) by means of the NG-U interface

The access nodes 120 may be interconnected with each other by means of Xn interfaces 126. The access nodes 120 are also connected by means of NG interfaces 128 to the core network 130. The cellular network 100 could be configured to operate in licensed or unlicensed frequency bands.

The access nodes 120 can be deployed in a NR standalone operation/scenario. The access nodes 120 can be deployed in a non-standalone operation/scenario. The access nodes can be deployed in a Carrier Aggregation operation/scenario. The access nodes 120 can be deployed in a dual connectivity operation/scenario, i.e. Multi Radio Access Technology - Dual Connection (MR-DC), not least for example such as:
Evolved Universal Terrestrial Radio Access - New Radio Dual Connectivity (EUTRA-NR-DC, also referred to as EN-DC),
New Radio - Evolved Universal Terrestrial Radio Access Dual Connectivity (NR-EUTRA-DC, also referred to as NE-DC),
Next Generation Radio Access Network Evolved Universal Terrestrial Radio Access - New Radio Dual Connectivity (NG-RAN E-UTRA-NR Dual Connectivity, also referred to as NGEN-DC),
or in New Radio Dual Connectivity (also referred to as NR-DC).

In such non-standalone/dual connectivity deployments, the access nodes 120 may be interconnected to each other by means of X2 or Xn interfaces, and connected to an Evolved Packet Core (EPC) by means of an S1 interface or to a 5G Core (5GC) by means of a NG interface.

The access nodes 120 are network elements in the network responsible for radio transmission and reception in one or more cells 122 to or from the terminal nodes 110. Such access nodes may also be referred to as a transmission reception points (TRP's) or base stations. The access nodes 120 are the network termination of a radio link. An access node can be implemented as a single network equipment, or disaggregated/distributed over two or more RAN nodes, such as a central unit (CU), a distributed unit (DU), a remote radio head-end (RRH), using different functional-split architectures and different interfaces.

The terminal nodes 110 are devices that terminate the user side of the radio link. They are devices allowing access to network services. The terminal nodes 110 may be mobile terminals. The terminal nodes 110 may be User Equipment or mobile stations. The term 'User Equipment' may be used to designate mobile equipment comprising a smart card for authentication/encryption etc such as a subscriber identity module (SIM). In other examples, the term 'User Equipment' is used to designate mobile equipment comprising circuitry embedded as part of the user equipment for authentication/encryption such as software SIM.

In the following description, an access node 120 will be referred to as a RAN node 120, and a terminal node 110 will be referred to as a UE 110.

FIG 2 illustrates an example of a RAN node, i.e. gNB 120, having a disaggregated/distributed (split) architecture. The gNB 120 comprises a Central Unit (gNB-CU) 210 and one or more distributed units (gNB-DU) 220. One gNB-DU 220 can support one or multiple cells 122 (not illustrated in FIG. 2). One cell is supported by only one gNB-DU 220.

The gNB-CU 210 is a logical node configured to host a Radio Resource Connection layer (RRC) and other layers of the gNB 120, including Service Data Adaptation Protocol (SDAP) and Packet Data Convergence Protocol (PDCP) of the gNB 120. The gNB-CU 210 controls the operation of one or more gNB-DUs 220. The gNB-DU 220 is a logical node configured to host Radio Link Control Protocol layer (RLC), Medium Access Control layer (MAC) and Physical layer (PHY) of the gNB 120. Operation of the gNB-DU is partly controlled by the gNB-CU.

The gNB-CU 210 is further separated into its Control Plane (CP) part, gNB-CU-CP 230, and its User Plane (UP) part, gNB-CU-UP 240. The gNB-CU-CP is a logical node hosting the control plane part of the gNB-CU, and terminating the RRC and PDCP protocol layers of the control plane while passing transparently Non Access Stratum (NAS) messages from/to the UEs to/from the 5GC. The gNB-CU-UP is a logical node hosting the user plane part of the gNB-CU, and terminating the SOAP and PDCP layers of the user plane. The gNB-CU-CP 230 and gNB-CU-UP 240 are interconnected with each other by means of an E1 interface 250.

The gNB-CU 210 and a gNB-DU 220 communicate via a dedicated interface, the F1 interface. The F1 interface connects the gNB-CU 210, hosting the higher CP/UP protocol layers, to the gNB-DU 220, hosting the lower CP/UP protocol layers. The F1 interface functions are divided into F1-Control Plane functions (F1-C) and F1-User Plane functions (F1-U). The gNB-CU-CP 230 and gNB-DU 220 are interconnected with each other by means of an F1-C interface 260. The gNB-CU-UP 240 and gNB-DU 220 are interconnected with each other by means of an F1-U interface 270.

In the following description, a RAN node's CU-CP, e.g. gNB-CU-CP 230, will be referred to as a CP-RAN node (or alternatively referred to as CU CP); and a RAN node's CU-UP, e.g. gNB-CU-UP 240, will be referred to as an UP-RAN node (or alternatively referred to as CU UP).

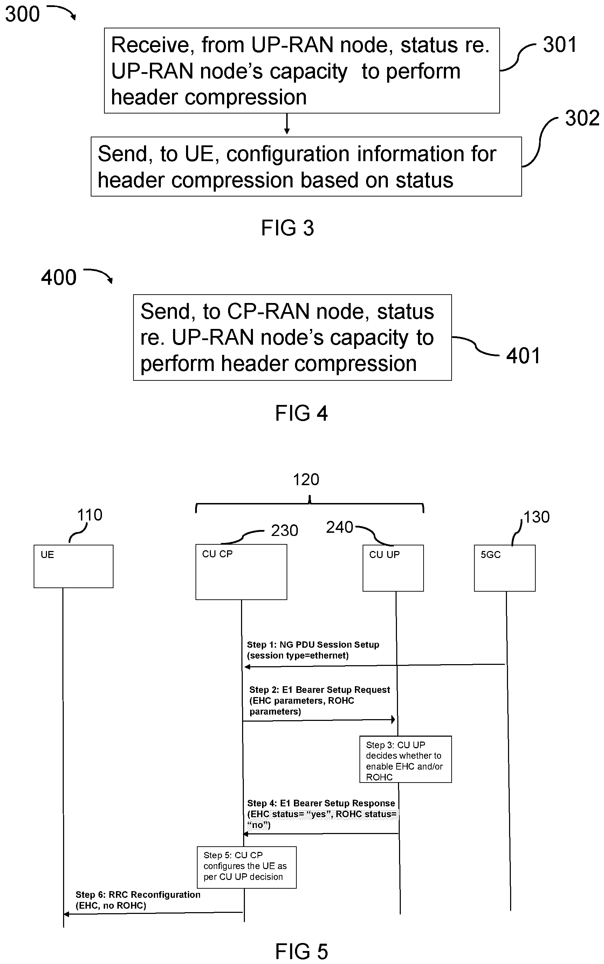

FIG. 3 schematically illustrates an example of a method 300 according to the present disclosure that can be implemented by an apparatus such as a CP-RAN node 230 of a CU of a disaggregated RAN node (e.g. a distributed/disaggregated gNB), wherein the disaggregated RAN node comprises at least the CU, and wherein the CU comprises at least the CP-RAN node and an UP-RAN node.

The method comprises, at block 301, receiving, from the UP-RAN node, at least one status indicative of the UP-RAN node's capacity to perform at least one respective type of header compression

As will be discussed further below, in some examples, the status may be provided by the UP-RAN node during an E1 Application Protocol (AP) procedure for setting up/modifying a bearer context. For instance, the at least one status may be included (e.g. as a new Information Element (IE)) in a signalling message from the UP-RAN node to the CP-RAN node during an E1 AP procedure for setting up/modifying a Data Radio Bearer (DRB) over an E1 interface between the CP-RAN node and the UP-RAN node. For example, the at least one status may be provided in an IE of a BEARER CONTEXT SETUP RESPONSE message sent by the UP-RAN node to the CP-RAN node over the E1 interface in response to a BEARER CONTEXT SETUP REQUEST message sent by the CP-RAN node to the UP-RAN node over the E1 interface.

As will be discussed further below, in other examples, the at least one status may be provided in advance of performing an E1 AP procedure for setting up/modifying a bearer context. For instance, the at least one status may be included in a signalling message from the UP-RAN node to the CP-RAN node sent prior to performance of an E1 AP bearer setup/modify procedure. By providing the at least one status in advance, the CP-RAN node is already aware of the UP-RAN node's capacity to perform header compression at a subsequent time when the CP-RAN node initiates an E1 AP bearer setup/modify procedure.

The at least one status may indicate whether, and/or to what extent, the UP-RAN node has available capacity to perform the at least one respective type of header compression for DRB, based in part on current available resources for header compression in the UP-RAN node.

In block 302, configuration information for the at least one type of header compression is sent to a User Equipment, UE, based in part on the respective at least one status. The configuration information for the at least one type of header compression may be provided to the UE via legacy RRC signalling and appropriate IE's for the same, for example PDCP-Config IE (which is used to set configurable PDCP parameters for signalling and DRB) of an RRC RECONFIGURATION message.

In some examples, the status can be an indication from the UP-RAN node as to whether or not it enables, activates and/or can perform the at least one type of header compression. In some examples, the at least one status may be an indication from the UP-RAN node as to its load, e.g. a report quantifying the current loading or availability of the UP-RAN node's resources (e.g. not least processing and memory resources) for performing a respective type of header compression. For example, the at least one status may report at least one load value (90% of resources loaded) or at least one availability value (10% of resources still available) for performing respectively at least one type of header compression.

In some examples, the at least one status information can be determined by the UP-RAN node based on its load, e.g. dynamically determining its current processor capacity/availability for performing compression/decompression.

The at least one type of header compression may comprise: an Ethernet header compression type and an IP header compression type. The at least one status may comprise a first status for the Ethernet header compression type (e.g. EHC) and a second status for the IP header compression type (e.g. ROHC - for compressing IP payload in the case that the Ethernet traffic carries IP payload - i.e. wherein the traffic is IP over Ethernet).

The CP-RAN node may decide to configure the UE to perform only those types of header compression that the at least one status indicates the UP-RAN node has capacity to perform. This may thereby maintain correspondence between the header compression parameters and contexts of the UE and those of the UP-RAN node so as to ensure correspondence/synchronization between the header compression performed by the UE and the UP-RAN node.

For example, the received status may indicate that the UP-RAN node has capacity to perform both EHC and ROHC. Based on this, the CP-RAN node may send, to the UE, header compression parameters for both EHC and ROHC. By contrast, where the received status indicates that the UP-RAN node does not have the capacity to perform either EHC or ROHC, based on this, the CP-RAN node precludes sending EHC and ROHC header compression parameters (or equivalently sends a "null" container for corresponding IE). Alternatively, the received status indicates that the UP-RAN node has capacity to perform EHC but not ROHC (or vice versa). Based on this, the CP-RAN node may send, to the UE, header compression parameters only for EHC and not send header compression parameters for ROHC (or vice versa).

Various examples of the disclosure may thereby enable only appropriate header compression parameters to be sent to the UE taking into account dynamic criteria relating to the UP-RAN node's capacity/loading/availability. Advantageously, this may thereby avoid desynchronization between the UE and UP-RAN node with regards to the performance (or not) of header compression. Various examples may avoid sending redundant header compression parameters to the UE (i.e. for types of compression that the UP-RAN node does not have the capacity to perform). Various examples may thereby also avoid the UE being configured to perform a type of header compression and to create associated compression related contexts that the UP-RAN node does not have the capacity to perform. Various examples may also flexibly accommodate performance of a subset of the different types of header compression, e.g. performing just one of EHC and ROHC.

In some examples, the CP-RAN node further comprises means for sending, to the UP-RAN node, a request to setup or modify a Data Radio Bearer, DRB, associated with the UE, e.g. a BEARER CONTEXT SETUP REQUEST message.

In some examples, such as illustrated with respect to FIG. 5 discussed further below, the at least one status is received, from the UP-RAN node, responsive to the request to setup or modify the DRB. In some examples, the at least one status is received, from the UP-RAN node, in a BEARER CONTEXT SETUP RESPONSE message, or a BEARER CONTEXT MODIFICATION RESPONSE message. The at least one status may be provided as a Compression Result IE in a PDU Session Resource Setup List IE of a BEARER CONTEXT SETUP RESPONSE message of a bearer context setup procedure over E1 interface. For example, the at least one status may be provided in new IE's in the E1 BEARER CONTEXT SETUP RESPONSE message, e.g. an EHC status IE and/or an ROHC status IE.

For example, the CP-RAN node may send, to the UP-RAN node, a BEARER CONTEXT SETUP REQUEST message over an E1 interface between the CP-RAN node and the UP-RAN node. The request may comprise header compression parameters for one or more types of header compression (such header compression parameters may be provided by "EHC Parameters" and "ROHC Parameters" IE's of a PDCP Configuration IE of the BEARER CONTEXT SETUP REQUEST message). Responsive to the request, the UP-RAN node determines its current status and capacity for performing each type of header compression for the DRB to be established, and the UP-RAN node sends a status for each types of header compression in IE's of a BEARER CONTEXT SETUP RESPONSE message sent over E1 interface (e.g. via "EHC status" and "ROHC status" IE's of the BEARER CONTEXT SETUP RESPONSE message), for instance EHC status=yes/enabled, ROHC status=no/disabled). In such a manner, the status is provided during an E1 AP bearer setup/modification request procedure (e.g. in the BEARER CONTEXT SETUP/MODIFICATION RESPONSE message).

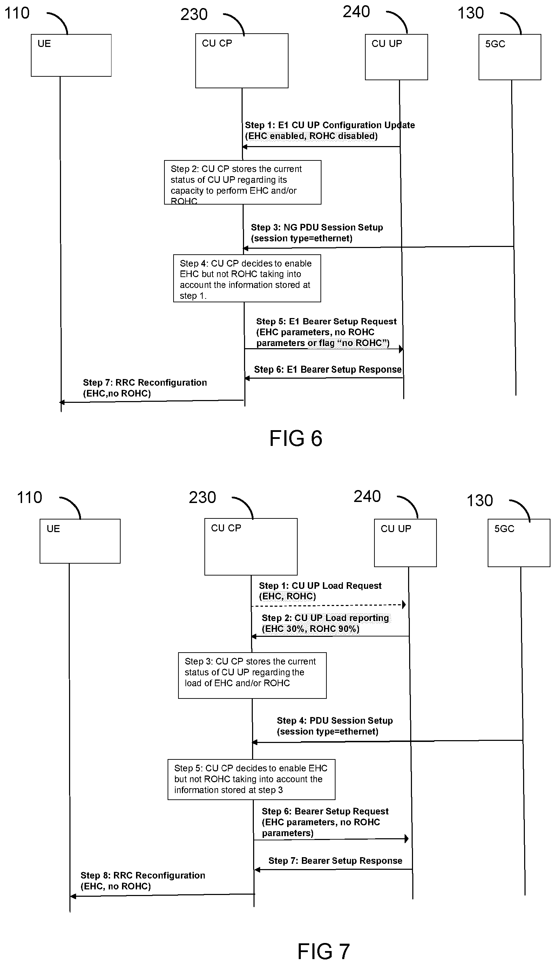

In some examples, such as illustrated with respect to FIGs. 6 and 7 discussed further below, the at least one status is received before/prior to the CP-RAN node's initiation of an E1 AP bearer setup/modification procedure. Since the at least one status has been received, from the UP-RAN node, prior to sending a request for bearer setup/modification, the request can be based in part on the previously received at least one status. For example, if a previously received status indicated that the UP-RAN node had capacity for EHC but not for ROHC, then the BEARER CONTEXT SETUP/MODIFICATION REQUEST message may comprise configuration information for EHC but not for ROHC (alternatively the request may comprise configuration information for ROHC, but also include a flag or some other indicator that the UP-RAN node is not to perform ROHC).

In this regard, in some examples, the CP-RAN node further comprises means for sending, to the UP-RAN node, a request to setup or modify a data radio bearer, DRB, associated with the UE, wherein the request comprises configuration parameters for the at least one type of header compression based in part on the respective at least one status, and wherein the at least one status has been received, from the UP-RAN node, prior to sending the request.

In some examples, the at least one status may indicate whether the at least one respective type of header compression for the DRB is enabled or disabled by the UP-RAN node. For instance, the at least one status may be provided via at least one IE indicating whether the at least one type of header compression is enabled or disabled by the UP-RAN node in a message sent, over the E1 interface, for example an IE of a GNB-CU-UP CONFIGURATION UPDATE message. Such a message may be sent by the UP-RAN node: periodically/at regular intervals, based in part on a timer, or on an 'ad-hoc' basis, or whenever the status changes, or in response to a condition being satisfied. Such a condition may comprise a determination that a threshold capacity/loading level have been crossed (i.e. such that the UP-RAN node no longer has the capacity to perform a particular type of header compression [overload condition], or that the UP-RAN node now does have the capacity to perform a particular type of header compression) thereby communicating to the CP-RAN node a change as to whether or not the UP-RAN node has sufficient capacity to perform a particular type of header compression.

In some examples, the at least one status is a load report indicating the UP-RAN node's load with respect to performing the at least one respective type of header compression. In some examples, the CP-RAN node sends, to the UP-RAN node, a request for the load report and, responsive to which, the UP-RAN node sends, periodically/at regular intervals, based in part on a timer, or an ad-hoc basis, to the CP-RAN node, the load report.

FIG. 4 schematically illustrates an example of a method 400 according to the present disclosure that can be implemented by an apparatus such as an UP-RAN node 240 of a CU of a disaggregated RAN node (e.g. a distributed/disaggregated gNB), wherein the disaggregated RAN node comprises at least the CU, and wherein the CU comprises at least the UP-RAN node and the CP-RAN node.

The method comprises, at block 401, sending, to the UP-RAN node, at least one status indicative of the UP-RAN node's capacity to perform at least one respective type of header compression.

In some examples, the at least one status indicates whether, and/or to what extent, the UP-RAN node has available capacity to perform the at least one respective type of header compression for a data radio bearer, DRB, based in part on current available resources for header compression in the UP-RAN node.

In some examples, the at least one type of header compression comprises: an Ethernet header compression type and an IP header compression type. In some examples, the at least one status comprises a first status for the Ethernet header compression type and a second status for the IP header compression type.

In some examples, the UP-RAN node further comprises means for receiving, from the CP-RAN node, a request to setup or modify a DRB associated with a UE, and wherein the at least one status is sent, to the CP-RAN node, in a response to the request.

In some examples, the UP-RAN node further comprises means for receiving, from the CP-RAN node, a request to setup or modify a data radio bearer, DRB, associated with a UE. In some examples, the request comprises configuration information for the at least one type of header compression based in part on the respective at least one status. In some examples, the at least one status is sent, to the CP-RAN node, prior to receiving the request.

In some examples, the at least one status indicates whether the at least one respective type of header compression for the DRB is enabled or disabled by the UP-RAN node.

In some examples, the at least one status is a load report indicating the UP-RAN node's load with respect to performing the at least one respective type of header compression.

In some examples, the UP-RAN node further comprises means for receiving, from the CP-RAN node, a request for triggering the load report. In some examples, the load report is sent, to the CP-RAN node, in response to the request for the load report.

FIG. 5 schematically illustrates an example of signalling (between a disaggregated NG-RAN node 120 (comprising not least a CU CP 230 and CU UP 240), UE 110 and 5GC 130).

In Step 1, a PDU session setup message, such as a NG PDU SESSION RESOURCE SETUP REQUEST message, is received (over an NG interface) by the CU CP of the disaggregated NG-RAN node which indicates a setup of a PDU session, whose PDU session type is set to "Ethernet" (i.e., the packet data units of the PDU session are Ethernet frames). In some examples, the CU CP may receive a PDU Session Modification message, such as a NG PDU SESSION RESOURCE MODIFY REQUEST message, which may include a new QoS flow to be added.

In Step 2, responsive to the received PDU session setup message (or QoS flow setup), the CU CP sends, to the CU UP a bearer setup request message, such as an E1 BEARER CONTEXT SETUP REQUEST message, for a new DRB to be setup which is to be associated with the UE. The bearer setup request includes compression parameters for both Ethernet header compression (in this particular example - EHC) and IP header compression (in this particular example - ROHC).

In Step 3, the CU UP makes a dynamic decision, on the call (DRB) setup in real time based on its current resources (processing and memory loading/capacity/availability), as to whether to enable or disable each type of header compression.

In Step 4, the CU UP makes the CU CP aware of its decision by means of a bearer setup response, such as an E1 BEARER CONTEXT SETUP RESPONSE message, by indicating whether it intends to use EHC and/or ROHC compression for the Ethernet-type DRB. In this regard, the CU UP indicates back its decision, based on its processing load conditions, whether it accepts to enable compression or not for the DRB for each of the types of header compression, i.e. the CU UP indicates whether it intends to enable or disable each of EHC and ROHC for the DRB being established. Such indication is provided via sending a status for each type of header compression, e.g. an EHC status IE and an ROHC status IE, in an E1 bearer setup response. In this particular example, EHC status=yes whereas ROHC status = no.

In Step 5, the CU CP takes into account the response from CU UP (comprising the EHC status, ROHC status) and decides whether the UE should be configured for EHC and/or ROHC. In this particular example, it is determined that the UE should be configured for EHC but not ROHC.

In Step 6, the CU CP sends configuration information to the UE. In this regard, the CU CP sends an RRC message, such as an RRC RECONFIGURATION message, to the UE comprising header compression parameters for the types of header compression that have been enabled. In this particular example, the CU CP sends an RRC message comprising compression parameters for EHC, but does not send compression parameters for ROHC.

In such a manner, the CU UP may dynamically decide, on call (DRB) setup basis in real time based on its current processing capabilities (load/availability), whether to enable/activate each of one or more types of header compression. The CU UP may then make the CU CP aware of its decision during the E1 bearer setup response, and the CU CP may then duly send header compression parameters to the UE so that it might be duly configured to perform the types of header compression enabled by the CU UP.

The CU UP does not have to reveal its processing load status to the CU CP. The CU CP may provide the compression parameters for both Ethernet and ROHC to the CU UP, and the CU UP then decides whether to enable or not each type of header compression for the call (DRB) based on its available processing capacity. The CU UP's decision could also take into account other parameters of the call (priority, bit rate, quality of service (QOS), etc.)

FIG. 6 schematically illustrates a further example of signalling (between a disaggregated NG-RAN node (comprising not least a CU CP 230 and CU UP 240), UE 110 and 5GC 130).

In Step 1, the CU UP provides updates to the CU CP about any changes to the status of the CU UP's capacity to perform EHC and/or ROHC. In this regard, the CU UP sends the status for each of EHC and ROHC via a CU UP configuration update message, such as an E1 GNB-CU-UP CONFIGURATION UPDATE message, which may be sent periodically or when a header compression status changes, e.g. changes between enabled and disabled. The message provides an indication as to whether each type of header compression is enabled or disabled by the CU UP based on the CU UP's capacity to perform each type of header compression. In such a manner, the CU UP provides a semi-static enabled and disabled indication. In the CU UP configuration update messages, the CU UP notifies the CU CP about the current general compression status in the CU UP, i.e. whether or not CU UP is currently capable to handle EHC and/or ROHC. It may send an update message whenever this status changes. In this particular example, the EHC is enabled and the ROHC is disabled. Steps 1 and 2 may be repeated periodically, ad-hoc, or on demand, such that the CU CP stores the latest status information for each header compression type.

In Step 2, the CU CP stores the received status/indication therein as to the CU UP's capacity to perform each type of header compression.

In Step 3, after the storing Step 2, subsequently, a PDU session setup is received (over an NG interface) by the CU CP of the disaggregated NG-RAN node from the 5GC, which indicates a PDU session type set to "Ethernet". In some examples, the CU CP may receive a PDU Session Modification, which may include a new QoS flow to be added.

In Step 4, responsive to the PDU session setup (or QoS flow setup), the CU UP decides whether to enable each type of header compression based on the latest status information stored in Step 2.

In Step 5, based in part on the decision of Step 4, the CU CP sends, to the CU UP in a bearer setup request message, a request for new a DRB (which is to be associated with the UE) to be setup. The bearer setup request message includes compression parameters only for the types of compression enabled by the CU UP (or alternatively, it also includes compression parameters for the types of compression disabled by the CU UP, but it includes a flag of other indictor that such types of header compression are to be disabled). In this particular example, the bearer setup request message comprises compression parameter only for EHC and not for ROHC. (alternatively, it may include compression parameters for both EHC and ROHC but also include a flag to indication ROHC is not to be enabled).

In Step 6, the CU UP acknowledges the request from CU CP in a bearer setup response message.

In Step 7, the CU CP configures the UE accordingly so as to perform just the types of header compression enabled at the CU UP. In this regard, the CU CP sends configuration information to the UE. The CU CP sends an RRC message to the UE comprising header compression parameters/contexts for the types of header compression that have been enabled. In this particular example, the CU CP sends an RRC message comprising compression parameters/contexts for EHC, but does not send compression parameters/contexts for ROHC.

In such a manner, the CU UP may provide, to the CU CP in advance of initiating a process for establishing a DRB, statuses for particular types of header compression. Then, whenever a DRB is to be established, the CU CP can decide at that time whether to enable or disable particular types of header compression. Also, the CU CP is able to determine whether or not to configure EHC and/or ROHC compression contexts in the UE based on CU UP compression processing capacity.

The CU UP may reveal its compression processing load/capacity to the CU CP in advance (periodically or upon status change/crossing a compression processing load threshold) and CU CP stores the same. Then, subsequently, the CU CP can make a decision (as to whether to enable or not a type of header compression for a particular DRB or call to setup at the CU UP) based in part on the currently stored compression processing load/capacity of the CU UP (i.e. the latest processing load or capacity update received from the CU UP and stored in the CU CP). The decision may also be based on other parameters of the DRB call (not least such as priority, bit rate, QoS, etc..). The CU CP may signal its decision to CU UP, for example CU CP sends the EHC and/or ROHC compression parameters to the CU UP only if it decides to enable the EHC and/or ROHC.

FIG. 7 schematically illustrates a yet further example of signalling (between a disaggregated NG-RAN node (comprising not least a CU CP 230 and CU UP 240), UE 110 and 5GC 130).

In Step 1, the CU CP sends a request, to the CU UP, to trigger load reporting of the CU UP's current load with respect to performing each of one or more types of header compression. The load update request is sent from the CU CP over E1 via a CU UP load request message (or via another E1 message). The request may include codepoints corresponding to the request - in this particular example the request concerns EHC and ROHC processing load status to be reported, as well as timer periodicity if the request is for periodic reports. The load reporting can be periodic or "on demand".

In Step 2, responsive to receipt of the CU UP load request, the CU UP reports its processing load for running EHC and/or running ROHC to the CU CP. In this particular example, it reports that it is loaded 30% for EHC processing and 90% for ROHC processing. Alternative, the CU UP status/load information can be expressed in terms of availability, e.g. EHC processing availability at 70%, and ROHC processing availability at 10%. Also, the load or availability information can be quantized in many different ways (every 1 percent, every 5 percent, every 10 percent, every 20 percent, etc.).

In Step 3, the CU CP stores the received load report and/or the status/indication therein as to the CU UP's capacity to perform each type of header compression. Steps 1 - 3 may be repeated periodically, ad-hoc, or on demand, such that the CU CP stores the latest status information for each header compression type.

In Step 4, after the storing Step 3, subsequently, a PDU session setup is received (over an NG interface) by the CU CP of the disaggregated NG-RAN node from the 5GC, which indicates a PDU session type set to "Ethernet". In some examples, the CU CP may receive a PDU Session Modification, which may include a new QoS flow to be added.

In Step 5, responsive to the PDU session setup (or QoS flow setup), the CU CP decides whether to enable each type of header compression based on the latest load report/status information stored in Step 3. In the example, it decides to enable EHC but not ROHC.

In Step 6, based in part on the decision of Step 5, the CU CP sends, to the CU UP in a bearer setup request message, a request for new a DRB (which is to be associated with the UE) to be setup. The bearer setup request message includes compression parameters only for the types of compression enabled by the CU UP (or alternatively, it also includes compression parameters for the types of compression disabled by the CU UP, but it includes a flag of other indictor that such types of header compression are to be disabled). In this particular example, the bearer setup request message comprises compression parameter only for EHC and not for ROHC.

In Step 7: CU UP acknowledges the request from CU CP by sending a bearer setup response message.

In Step 8, the CU CP configures the UE accordingly so as to perform just the types of header compression enabled at the CU UP. In this regard, the CU CP sends configuration information to the UE. The CU CP sends an RRC message to the UE comprising header compression parameters/contexts for the types of header compression that have been enabled. In this particular example, the CU CP sends an RRC message comprising compression parameters/contexts for EHC, but does not send compression parameters/contexts for ROHC.

In such a manner, the CU UP may provide load reporting feedback (periodically or "on demand"), to the CU CP, in advance of initiating a process for establishing a DRB, notifying the CU CP about the CU UP's current processing load status for each individual particular type of header compression. Then, when a DRB is to be established, the CU CP can decide in real time on a case by case basis whether to enable or disable particular types of header compression for a DRB to be established. Also, the CU CP is able to determine whether or not to configure EHC and/or ROHC compression contexts in the UE based on CU UP compression processing capacity.

Examples of signalling for use examples of the present disclosure will now be described.

An example is shown below of an IE of an RRC message for use in sending, to the UE, configuration information for one or more types of header compression, namely IE PDCP-Config. Such an IE of RRC messages may be used in the RRC RECONFIGURATION message sent from the CP-RAN node to the UE (i.e. as per block 302 of FIG. 3, and Steps 6, 7 and 8 respectively of FIGS. 5, 6 and 7).
*- PDCP-Config P-Config* [as defined in 3GPP TS 38.331 V15.9.0 (2020-03)*]*

The IE *PDCP-Config* is used to set the configurable PDCP parameters for signalling and data radio bearers.

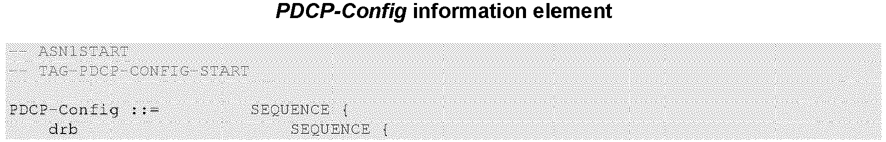

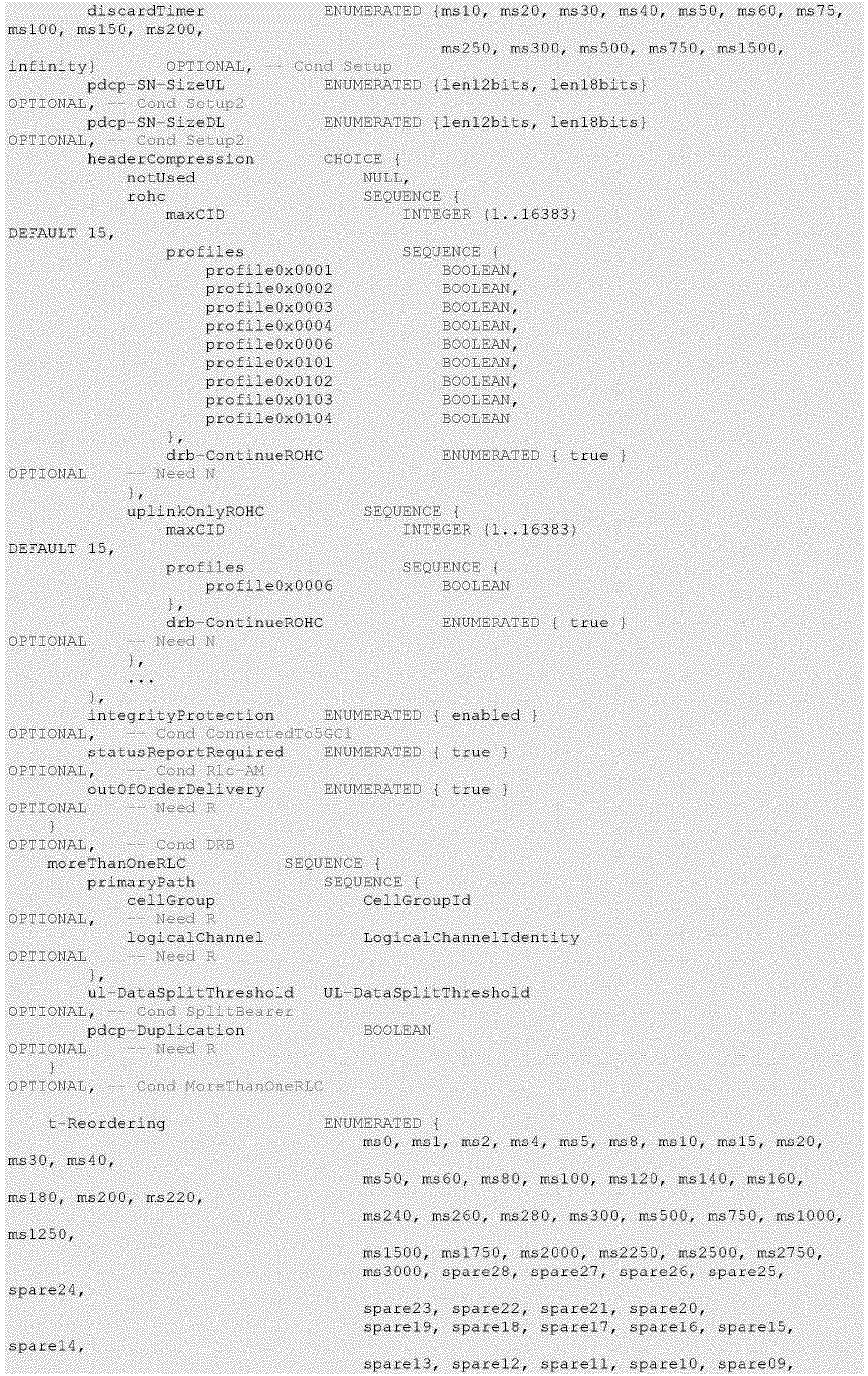

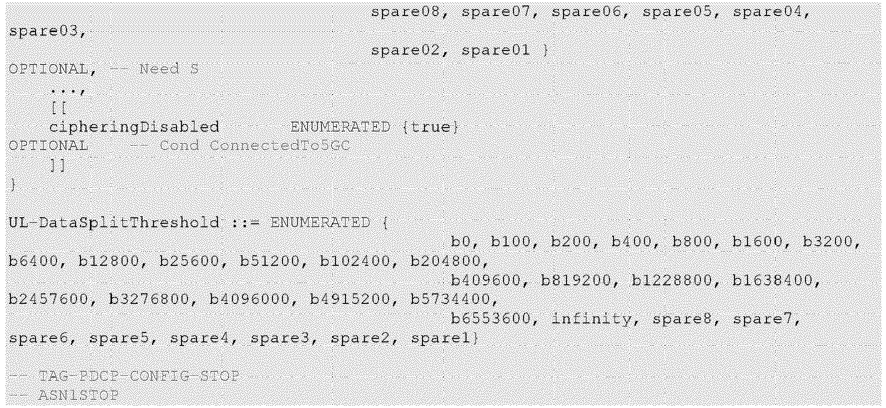

The IE *PDCP-Config* may be further configured to provide EHC configuration as follows:

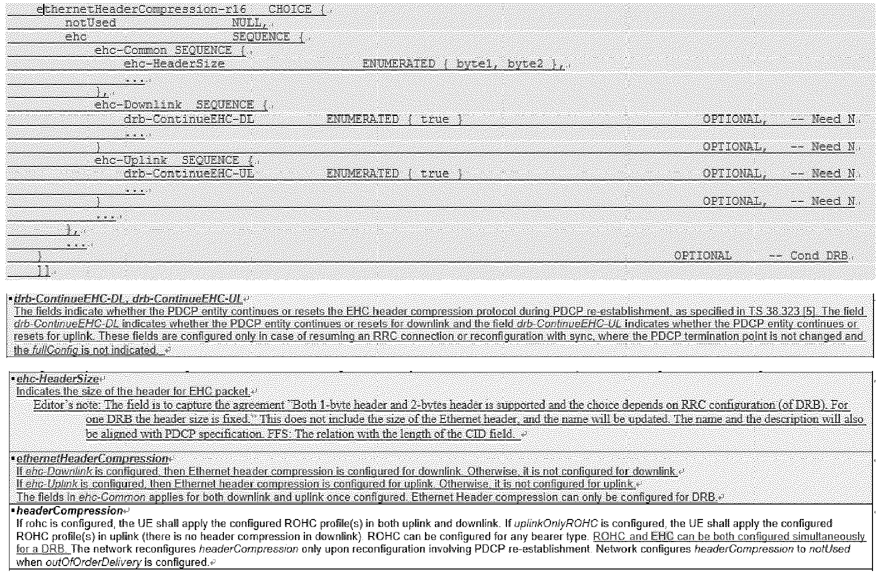

An example is shown below of an IE of an E1 AP message for use in sending, from the UP-RAN node to the CP-RAN node, a status indicative of the UP-RAN node's capacity to perform a type of header compression, namely IE Compression Result. Such an IE of an E1 AP message may be used in a BEARER CONTEXT SETUP RESPONSE message sent from the UP-RAN node to the CP-RAN node (i.e. as per blocks 301 and 401 of FIGs. 3 and 4 respectively; and Step 4 of FIG. 5.

### PDU Session Resource Setup List

This IE contains setup PDU session resource related information used at Bearer Context Setup Response

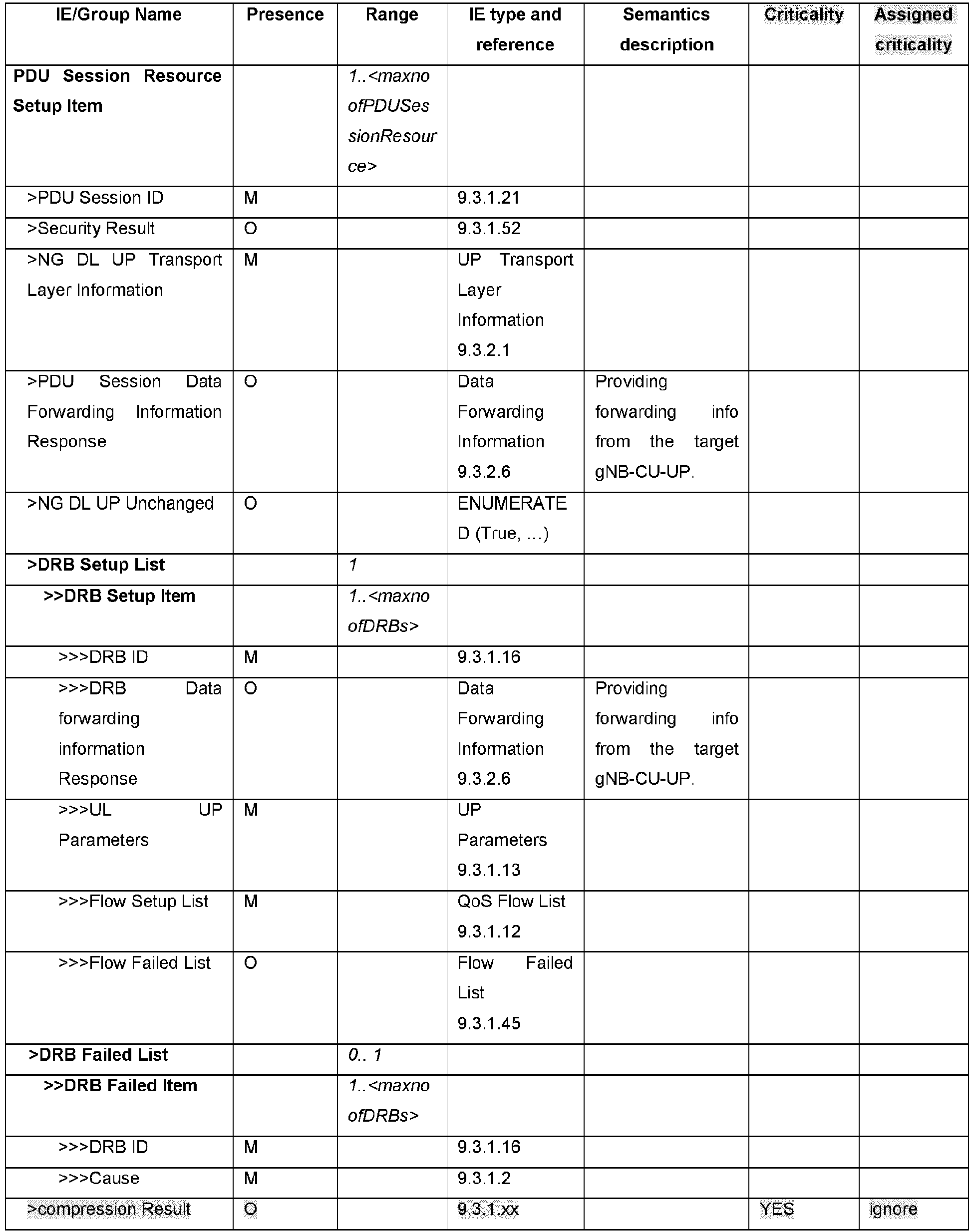

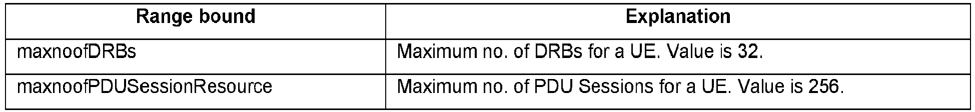

### 9.3.1.xx Compression Result

This IE indicates whether the Ethernet compression is performed or not.

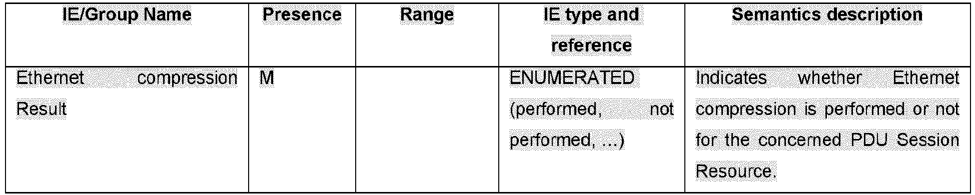

Various, but not necessarily all, examples of the present disclosure can take the form of a method, an apparatus or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

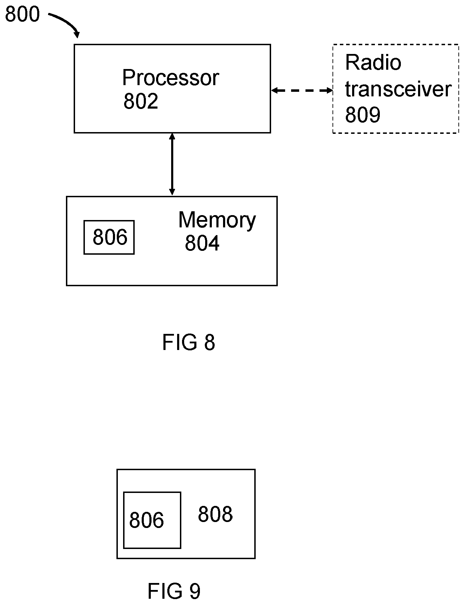

Fig. 8 illustrates an example of a controller 800. The controller 800 could be provided within an apparatus, such as a CP-RAN node 230 or an UP-RAN node 240, and is coupled to a radio transceiver 809 in a DU or Remote Radio Head (RRH). The apparatus can be embodied by a computing device, not least such as those mentioned above. In some but not necessarily all examples, the apparatus can be embodied as a chip, chip set or module, i.e. for use in any of the foregoing. Implementation of a controller 800 may be as controller circuitry. The controller 800 may be implemented in hardware alone, have certain aspects in software including firmware alone or can be a combination of hardware and software (including firmware).

As illustrated in Fig. 8 the controller 800 may be implemented using instructions that enable hardware functionality, for example, by using executable instructions of a computer program 806 in a general-purpose or special-purpose processor 802 that may be stored on a computer readable storage medium (disk, memory etc) to be executed by such a processor 802.

The processor 802 is configured to read from and write to the memory 804. The processor 802 may also comprise an output interface via which data and/or commands are output by the processor 802 and an input interface via which data and/or commands are input to the processor 802.

The memory 804 stores a computer program 806 comprising computer program instructions (computer program code) that controls the operation of the apparatus 110, 120 when loaded into the processor 802. The computer program instructions, of the computer program 806, provide the logic and routines that enables the apparatus to perform the methods, processes, procedures and signalling described above and illustrated in Figs. 3 - 7. The processor 802 by reading the memory 804 is able to load and execute the computer program 806.

Although the memory 804 is illustrated as a single component/circuitry it may be implemented as one or more separate components/circuitry some or all of which may be integrated/removable and/or may provide permanent/semi-permanent/ dynamic/cached storage.

Although the processor 802 is illustrated as a single component/circuitry it may be implemented as one or more separate components/circuitry some or all of which may be integrated/removable. The processor 802 may be a single core or multi-core processor.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

In examples where the apparatus is provided within a CP-RAN node 230, the apparatus therefore comprises:
at least one processor 802; and
at least one memory 804 including computer program code
the at least one memory 804 and the computer program code configured to, with the at least one processor 802, cause the apparatus at least to perform:
   receiving, from the UP-RAN node, at least one status indicative of the UP-RAN node's capacity to perform at least one respective type of header compression; and
   sending configuration information for the at least one type of header compression to a User Equipment, UE, based in part on the respective at least one status.

In examples where the apparatus is provided within an UP-RAN node 240, the apparatus therefore comprises:
at least one processor 802; and
at least one memory 804 including computer program code
the at least one memory 804 and the computer program code configured to, with the at least one processor 802, cause the apparatus at least to perform:
   sending, to the CP-RAN node, at least one status indicative of the UP-RAN node's capacity to perform at least one respective type of header compression.

According to some examples of the present disclosure, there is provided a system (e.g. a CU-RAN node 210, or RAN node 120) comprising the aforementioned CP-RAN node 230 and UP-RAN node 240. From the foregoing it will be appreciated that in some examples there is provided a system comprising: at least one UE 110 and at least one RAN node 120.

The UE 110, the RAN node 120 can be part of the Internet of Things forming part of a larger, distributed network.

As illustrated in Fig. 9, the computer program 806 may arrive at the apparatus 110, 120 via any suitable delivery mechanism 810. The delivery mechanism 810 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 806. The delivery mechanism may be a signal configured to reliably transfer the computer program 806. The apparatus 110, 120 may propagate or transmit the computer program 806 as a computer data signal.

In certain examples of the present disclosure, there is provided computer program instructions for causing a CP-RAN node 230 to perform at least the following or for performing at least the following:
receiving, from the UP-RAN node, at least one status indicative of the UP-RAN node's capacity to perform at least one respective type of header compression; and
sending configuration information for the at least one type of header compression to a User Equipment, UE, based in part on the respective at least one status.

In certain examples of the present disclosure, there is provided computer program instructions for causing an UP-RAN node 240 to perform at least the following or for performing at least the following:
sending, to the CP-RAN node, at least one status indicative of the UP-RAN node's capacity to perform at least one respective type of header compression.

The various examples discussed above have primarily been described with respect to the performance of header compression. However, it is to be appreciated that such references to header compression also comprise the performance of associated respective decompression.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analogue and/or digital circuitry) and
(b) combinations of hardware circuits and software, such as (as applicable):
   (i) a combination of analogue and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The stages illustrated in Figs. 3 to 7 can represent steps in a method and/or sections of code in the computer program 806. The illustration of a particular order to the blocks does not necessarily imply that there is a required or preferred order for the blocks and the order and arrangement of the block may be varied. Furthermore, it can be possible for some blocks to be omitted.

Where a structural feature has been described, it may be replaced by means for performing one or more of the functions of the structural feature whether that function or those functions are explicitly or implicitly described.

In some but not necessarily all examples, not least such as Enhanced Mobile Broadband (eMBB) use cases, the UE may embodied on a hand held portable electronic device, such as a mobile telephone, wearable computing device or personal digital assistant, that can additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions.

The UE may also refer to Internet of Things (IoT) devices, Industrial IOT devices, massive industrial networks, smart city infrastructure, wearable devices, networked medical devices, autonomous devices, etc. These types of UE devices may operate for extended periods of time without human intervention (e.g., perform maintenance, replace or recharge an on-device battery, etc.), may have reduced processing power and/or memory storage, may have reduced battery storage capability due to having small form factors, may be integrated into machinery (e.g., heavy machinery, factory machinery, sealed devices, etc.), may be installed/located in hazardous environment or difficult to access environments, etc.

The apparatus can be provided in a module. As used here 'module' refers to a unit or apparatus that excludes certain parts/components that would be added by an end manufacturer or a user.

In some but not necessarily all examples, the UE 110 and the RAN node 120 are configured to communicate data with or without local storage of the data in a memory 804 at the UE 110 or the RAN node 120 and with or without local processing of the data by circuitry or processors at the UE 110, or the RAN node 120. The data may be stored in processed or unprocessed format remotely at one or more devices. The data may be stored in the Cloud. The data may be processed remotely at one or more devices. The data may be partially processed locally and partially processed remotely at one or more devices. The data may be communicated to the remote devices wirelessly via short range radio communications such as Wi-Fi or Bluetooth, for example, or over long-range cellular radio links. The apparatus may comprise a communications interface such as, for example, a radio transceiver for communication of data.

The processing of the data, whether local or remote, can be for the purpose of health monitoring, data aggregation, patient monitoring, vital signs monitoring or other purposes.

As used herein, the term "determining" (and grammatical variants thereof) can include, not least: deciding, calculating, computing, processing, deriving, investigating, looking up (e.g., looking up in a table, a database or another data structure), ascertaining and the like. Also, "determining" can include receiving (e.g., receiving information), accessing (e.g., accessing data in a memory), obtaining and the like. Also, "determining" can include resolving, selecting, choosing, establishing, and the like.

In this description, references to "a/an/the" [feature, element, component, means ...] are to be interpreted as "at least one" [feature, element, component, means ...] unless explicitly stated otherwise.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The description of a function should additionally be considered to also disclose any means suitable for performing that function. Where a structural feature has been described, it can be replaced by means for performing one or more of the functions of the structural feature whether that function or those functions are explicitly or implicitly described.

Although examples have been described in the preceding paragraphs with reference to various examples, it should be appreciated that modifications to the examples given can be made without departing from the scope of the claims.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

Features described in the preceding description may be used in combinations other than the combinations explicitly described above.

Although functions have been described with reference to certain features, those functions may be performable by other features whether described or not. Although features have been described with reference to certain examples, those features may also be present in other examples whether described or not. Accordingly, features described in relation to one example/aspect of the disclosure can include any or all of the features described in relation to another example/aspect of the disclosure, and vice versa, to the extent that they are not mutually inconsistent. Although specific terms are employed herein, they are used in a generic and descriptive sense only and not for purposes of limitation.

The term 'a' or `the' is used in this document with an inclusive not an exclusive meaning. That is any reference to X comprising a/the Y indicates that X may comprise only one Y or may comprise more than one Y unless the context clearly indicates the contrary. If it is intended to use 'a' or `the' with an exclusive meaning then it will be made clear in the context. In some circumstances the use of 'at least one' or `one or more' may be used to emphasis an inclusive meaning but the absence of these terms should not be taken to infer any exclusive meaning.

In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some but not necessarily all examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

While the disclosure has been shown and described with reference to various embodiments thereof, it will be understood by those skilled in the art that various changes in form and details may be made therein without departing from the scope of the disclosure as defined by the appended claims.

## Claims

1. A Control Plane Radio Access Network node (230), CP-RAN node, of a Central Unit (210), CU, of a disaggregated RAN node (120), wherein the CU (210) comprises at least the CP-RAN node (230) and a User Plane, UP, RAN node (240); the CP-RAN node (230) comprising:
means for receiving, from the UP-RAN node (240), at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
means for sending configuration information for the at least one type of header compression to a User Equipment (110), UE, based in part on the respective at least one status.

2. The CP-RAN node (230) of claim 1, wherein the at least one status indicates whether, and/or to what extent, the UP-RAN node (240) has available capacity to perform the at least one respective type of header compression for a data radio bearer, DRB, based in part on current available resources for header compression in the UP-RAN node (240).

3. The CP-RAN node (230) of claim 1 or 2, wherein the at least one type of header compression comprises: an Ethernet header compression type and an IP header compression type; and wherein the at least one status comprises a first status for the Ethernet header compression type and a second status for the IP header compression type.

4. The CP-RAN node (230) of any of claims 1 to 3, wherein the CP-RAN node (230) further comprises means for sending, to the UP-RAN node, a request to setup or modify a data radio bearer, DRB, associated with the UE (110), and wherein the at least one status is received in a response, from the UP-RAN node (240), to the request.

5. The CP-RAN node (230) of any of claims 1 to 3, wherein the CP-RAN node (230) further comprises means for sending, to the UP-RAN node (240), a request to setup or modify a data radio bearer, DRB, associated with the UE (110), wherein the request comprises configuration information for the at least one type of header compression based in part on the respective at least one status, and wherein the at least one status has been received, from the UP-RAN node (240), prior to sending the request.

6. The CP-RAN node (230) of claim 5, wherein the at least one status indicates whether the at least one respective type of header compression for the DRB is enabled or disabled by the UP-RAN node (240).

7. The CP-RAN node (230) of claim 5, wherein the at least one status is a load report indicating the UP-RAN node's load with respect to performing the at least one respective type of header compression.

8. The CP-RAN node (230) of claim 7, wherein the CP-RAN node (230) further comprises means for sending, to the UP-RAN node (240), a request for the load report; and
wherein the load report is received, from the UP-RAN node (240), in response to the request for the load report.

9. A User Plane Radio Access Network node, UP-RAN node (240), of a Central Unit (210), CU, of a disaggregated RAN node (120), wherein the CU (210) comprises at least the UP-RAN node (240) and a Control Plane, CP, RAN node(230); the UP-RAN node (240) comprising:
means for sending, to the CP-RAN node (230), at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

10. The UP-RAN node (240) of claim 9, wherein the at least one status indicates whether, and/or to what extent, the UP-RAN node (240) has available capacity to perform the at least one respective type of header compression for a data radio bearer, DRB, based in part on current available resources for header compression in the UP-RAN node (240).

11. The UP-RAN node (240) of claim 9 or 10, wherein the at least one type of header compression comprises: an Ethernet header compression type and an IP header compression type; and wherein the at least one status comprises a first status for the Ethernet header compression type and a second status for the IP header compression type.

12. The UP-RAN node (240) of any of claims 9 to 11, wherein the UP-RAN node (240) further comprises means for receiving, from the CP-RAN node (230), a request to setup or modify a data radio bearer, DRB, associated with a User Equipment (110), UE, and wherein the at least one status is sent, to the CP-RAN node (230), in a response to the request.

13. The UP-RAN node (240) of any of claims 9 to 11, wherein the UP-RAN node (240) further comprises means for receiving, from the CP-RAN node (230), a request to setup or modify a data radio bearer, DRB, associated with a User Equipment (110), UE, and wherein the request comprises configuration information for the at least one type of header compression based in part on the respective at least one status, and wherein the at least one status is sent, to the CP-RAN node (230), prior to receiving the request.

14. The UP-RAN node (240) of claim 13, wherein the at least one status indicates whether the at least one respective type of header compression for the DRB is enabled or disabled by the UP-RAN node (240).

15. The UP-RAN node (240) of claim 13, wherein the at least one status is a load report indicating the UP-RAN node's load with respect to performing the at least one respective type of header compression.

16. The UP-RAN node (240) of claim 15, wherein the UP-RAN node further comprises means for receiving, from the CP-RAN node (230), a request for the load report; and
wherein the load report is sent, to the CP-RAN node (230), in response to the request for the load report.

17. A method (300) for use in a Control Plane Radio Access Network node (230), CP-RAN node, of a Central Unit (210), CU, of a disaggregated RAN node (120), wherein the CU (210) comprises at least the CP-RAN node (230) and a User Plane, UP, RAN node (240); the method comprising:
receiving (301), from the UP-RAN node (240), at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression; and
sending (302) configuration information for the at least one type of header compression to a User Equipment, UE, (110) based in part on the respective at least one status.

18. A method (400) for use in a User Plane Radio Access Network node (240), UP-RAN node, of a Central Unit (210), CU, of a disaggregated RAN node (120), wherein the CU (210) comprises at least the UP-RAN node (240) and a Control Plane, CP, RAN node (230); the method comprising:
sending (401), to the CP-RAN node (230), at least one status indicative of the UP-RAN node's capacity to perform at least one respective type of header compression, wherein the at least one status indicates whether, and/or to what extent, the UP-RAN node (240) has capacity to perform the at least one respective type of header compression based in part on a loading of the UP-RAN node's resources for performing header compression.

## Patentansprüche

1. Steuerebenenfunkzugangsnetzwerkknoten (230), CP-RAN-Knoten, einer Zentraleinheit (210), CU, eines disaggregierten RAN-Knotens (120), wobei die CU (210) mindestens den CP-RAN-Knoten (230) und einen Benutzerebenen(UP)-RAN-Knoten (240) umfasst; wobei der CP-RAN-Knoten (230) Folgendes umfasst:
Mittel zum Empfangen von mindestens einem Status, der die Kapazität des UP-RAN-Knotens zum Durchführen von mindestens einem jeweiligen Typ einer Headerkomprimierung anzeigt, vom UP-RAN-Knoten (240), wobei der mindestens eine Status teilweise auf Basis einer Ladung von Ressourcen des UP-RAN-Knotens zum Durchführen einer Headerkomprimierung anzeigt, ob und/oder in welchem Maße der UP-RAN-Knoten (240) eine Kapazität zum Durchführen des mindestens einen jeweiligen Typs einer Headerkomprimierung aufweist; und
Mittel zum Senden von Auslegungsinformationen für den mindestens einen Typ einer Headerkomprimierung teilweise auf Basis des jeweiligen mindestens einen Status an eine Teilnehmereinrichtung (110), UE.

2. CP-RAN-Knoten (230) nach Anspruch 1, wobei der mindestens eine Status teilweise auf Basis von aktuellen verfügbaren Ressourcen für eine Headerkomprimierung im UP-RAN-Knoten (240) anzeigt, ob und/oder in welchem Maße der UP-RAN-Knoten (240) eine verfügbare Kapazität zum Durchführen des mindestens einen jeweiligen Typs einer Headerkomprimierung für einen Datenfunkträger, DRB, aufweist.

3. CP-RAN-Knoten (230) nach Anspruch 1 oder 2, wobei der mindestens eine Typ einer Headerkomprimierung Folgendes umfasst: einen Ethernet-Headerkomprimierungstyp und einen IP-Headerkomprimierungstyp; und wobei der mindestens eine Status einen ersten Status für den Ethernet-Headerkomprimierungstyp und einen zweiten Status für den IP-Headerkomprimierungstyp umfasst.

4. CP-RAN-Knoten (230) nach einem der Ansprüche 1 bis 3, wobei der CP-RAN-Knoten (230) ferner Mittel zum Senden einer Anforderung zum Einrichten oder Modifizieren eines Datenfunkträgers, DRB, der mit der UE (110) verknüpft ist, an den UP-RAN-Knoten umfasst, und wobei der mindestens eine Status in einer Antwort auf die Anforderung vom UP-RAN-Knoten (240) empfangen wird.

5. CP-RAN-Knoten (230) nach einem der Ansprüche 1 bis 3, wobei der CP-RAN-Knoten (230) ferner Mittel zum Senden einer Anforderung zum Einrichten oder Modifizieren eines Datenfunkträgers, DRB, der mit der UE (110) verknüpft ist, an den UP-RAN-Knoten (240) umfasst, wobei die Anforderung teilweise auf Basis des jeweiligen mindestens einen Status Auslegungsinformationen für den mindestens einen Typ einer Headerkomprimierung umfasst, und wobei der mindestens eine Status vor dem Senden der Anforderung vom UP-RAN-Knoten (240) empfangen wurde.

6. CP-RAN-Knoten (230) nach Anspruch 5, wobei der mindestens eine Status anzeigt, ob der mindestens eine jeweilige Typ einer Headerkomprimierung für den DRB vom UP-RAN-Knoten (240) aktiviert oder deaktiviert wurde.

7. CP-RAN-Knoten (230) nach Anspruch 5, wobei der mindestens eine Status ein Lastbericht ist, der die Last des UP-RAN-Knotens mit Bezug auf das Durchführen des mindestens einen jeweiligen Typs einer Headerkomprimierung anzeigt.

8. CP-RAN-Knoten (230) nach Anspruch 7, wobei der CP-RAN-Knoten (230) ferner Mittel zum Senden einer Anforderung des Lastberichts an den UP-RAN-Knoten (240) umfasst; und
wobei der Lastbericht in Reaktion auf die Anforderung des Lastberichts vom UP-RAN-Knoten (240) empfangen wird.

9. Benutzerebenenfunkzugangsnetzwerkknoten, UP-RAN-Knoten (240), einer Zentraleinheit (210), CU, eines disaggregierten RAN-Knotens (120), wobei die CU (210) mindestens den UP-RAN-Knoten (240) und einen Steuerebenen(CP)-RAN-Knoten (230) umfasst; wobei der UP-RAN-Knoten (240) Folgendes umfasst:
Mittel zum Senden von mindestens einem Status, der die Kapazität des UP-RAN-Knotens zum Durchführen von mindestens einem jeweiligen Typ einer Headerkomprimierung anzeigt, an den CP-RAN-Knoten (230), wobei der mindestens eine Status teilweise auf Basis einer Ladung von Ressourcen des UP-RAN-Knotens zum Durchführen einer Headerkomprimierung anzeigt, ob und/oder in welchem Maße der UP-RAN-Knoten (240) eine Kapazität zum Durchführen des mindestens einen jeweiligen Typs einer Headerkomprimierung aufweist.

10. UP-RAN-Knoten (240) nach Anspruch 9, wobei der mindestens eine Status teilweise auf Basis von aktuellen verfügbaren Ressourcen für eine Headerkomprimierung im UP-RAN-Knoten (240) anzeigt, ob und/oder in welchem Maße der UP-RAN-Knoten (240) eine verfügbare Kapazität zum Durchführen des mindestens einen jeweiligen Typs einer Headerkomprimierung für einen Datenfunkträger aufweist.

11. UP-RAN-Knoten (240) nach Anspruch 9 oder 10, wobei der mindestens eine Typ einer Headerkomprimierung Folgendes umfasst: einen Ethernet-Headerkomprimierungstyp und einen IP-Headerkomprimierungstyp; und wobei der mindestens eine Status einen ersten Status für den Ethernet-Headerkomprimierungstyp und einen zweiten Status für den IP-Headerkomprimierungstyp umfasst.

12. UP-RAN-Knoten (240) nach einem der Ansprüche 9 bis 11, wobei der UP-RAN-Knoten (240) ferner Mittel zum Empfangen einer Anforderung zum Einrichten oder Modifizieren eines Datenfunkträgers, DRB, der mit der Teilnehmereinrichtung (110), UE, verknüpft ist, vom CP-RAN-Knoten (230) umfasst, und wobei der mindestens eine Status in einer Antwort auf die Anforderung an den CP-RAN-Knoten (230) gesendet wird.

13. UP-RAN-Knoten (240) nach einem der Ansprüche 9 bis 11, wobei der UP-RAN-Knoten (240) ferner Mittel zum Empfangen einer Anforderung zum Einrichten oder Modifizieren eines Datenfunkträgers, DRB, der mit der Teilnehmereinrichtung (110), UE, verknüpft ist, vom CP-RAN-Knoten (230) umfasst, und wobei die Anforderung teilweise auf Basis des jeweiligen mindestens einen Status Auslegungsinformationen für den mindestens einen Typ einer Headerkomprimierung umfasst, und wobei der mindestens eine Status vor dem Empfangen der Anforderung an den CP-RAN-Knoten (230) gesendet wird.

14. UP-RAN-Knoten (240) nach Anspruch 13, wobei der mindestens eine Status anzeigt, ob der mindestens eine jeweilige Typ einer Headerkomprimierung für den DRB vom UP-RAN-Knoten (240) aktiviert oder deaktiviert wurde.

15. UP-RAN-Knoten (240) nach Anspruch 13, wobei der mindestens eine Status ein Lastbericht ist, der die Last des UP-RAN-Knotens mit Bezug auf das Durchführen des mindestens einen jeweiligen Typs einer Headerkomprimierung anzeigt.

16. UP-RAN-Knoten (240) nach Anspruch 15, wobei der UP-RAN-Knoten ferner Mittel zum Empfangen einer Anforderung des Lastberichts vom CP-RAN-Knoten (230) umfasst; und
wobei der Lastbericht in Reaktion auf die Anforderung des Lastberichts an den CP-RAN-Knoten (230) gesendet wird.

17. Verfahren (300) zur Verwendung in einem Steuerebenenfunkzugangsnetzwerkknoten (230), CP-RAN-Knoten, einer Zentraleinheit (210), CU, eines disaggregierten RAN-Knotens (120), wobei die CU (210) mindestens den CP-RAN-Knoten (230) und einen Benutzerebenen(UP)-RAN-Knoten (240) umfasst; wobei das Verfahren Folgendes umfasst:
Empfangen (301) von mindestens einem Status, der die Kapazität des UP-RAN-Knotens zum Durchführen von mindestens einem jeweiligen Typ einer Headerkomprimierung anzeigt, vom UP-RAN-Knoten (240), wobei der mindestens eine Status teilweise auf Basis einer Ladung von Ressourcen des UP-RAN-Knotens zum Durchführen einer Headerkomprimierung anzeigt, ob und/oder in welchem Maße der UP-RAN-Knoten (240) eine Kapazität zum Durchführen des mindestens einen jeweiligen Typs einer Headerkomprimierung aufweist; und
Senden (302) von Auslegungsinformationen für den mindestens einen Typ einer Headerkomprimierung teilweise auf Basis des jeweiligen mindestens einen Status an eine Teilnehmereinrichtung, UE, (110).

18. Verfahren (400) zur Verwendung in einem Benutzerebenenfunkzugangsnetzwerkknoten (240), UP-RAN-Knoten, einer Zentraleinheit (210), CU, eines disaggregierten RAN-Knotens (120), wobei die CU (210) mindestens den UP-RAN-Knoten (240) und einen Steuerebenen(CP)-RAN-Knoten (230) umfasst; wobei das Verfahren Folgendes umfasst:
Senden (401) von mindestens einem Status, der die Kapazität des UP-RAN-Knotens zum Durchführen von mindestens einem jeweiligen Typ einer Headerkomprimierung anzeigt, an den CP-RAN-Knoten (230), wobei der mindestens eine Status teilweise auf Basis einer Ladung von Ressourcen des UP-RAN-Knotens zum Durchführen einer Headerkomprimierung anzeigt, ob und/oder in welchem Maße der UP-RAN-Knoten (240) eine Kapazität zum Durchführen des mindestens einen jeweiligen Typs einer Headerkomprimierung aufweist.

## Revendications

1. Noeud de réseau d'accès radio de plan de contrôle, noeud CP-RAN, (230) d'une unité centrale, CU, (210) d'un noeud RAN désagrégé (120), dans lequel la CU (210) comprend au moins le noeud CP-RAN (230) et un noeud RAN de plan utilisateur, UP, (240) ; le noeud CP-RAN (230) comprenant :
des moyens pour recevoir, du noeud UP-RAN (240), au moins un statut indiquant la capacité du noeud UP-RAN à effectuer au moins un type respectif de compression d'en-tête, dans lequel l'au moins un statut indique si et/ou dans quelle mesure le noeud UP-RAN (240) a la capacité d'effectuer l'au moins un type respectif de compression d'en-tête en se basant en partie sur une charge des ressources du noeud UP-RAN pour effectuer une compression d'en-tête ; et
des moyens pour envoyer des informations de configuration pour l'au moins un type de compression d'en-tête à un équipement utilisateur, UE, (110) en se basant en partie sur l'au moins un statut respectif.

2. Noeud CP-RAN (230) selon la revendication 1, dans lequel l'au moins un statut indique si et/ou dans quelle mesure le noeud UP-RAN (240) a une capacité disponible pour effectuer l'au moins un type respectif de compression d'en-tête pour un support radio de données, DRB, en se basant en partie sur des ressources actuelles disponibles pour une compression d'en-tête dans le noeud UP-RAN (240).

3. Noeud CP-RAN (230) selon la revendication 1 ou 2, dans lequel l'au moins un type de compression d'en-tête comprend : un type de compression d'en-tête Ethernet et un type de compression d'en-tête IP ; et dans lequel l'au moins un statut comprend un premier statut pour le type de compression d'entête Ethernet et un deuxième statut pour le type de compression d'en-tête IP.

4. Noeud CP-RAN (230) selon l'une des revendications 1 à 3, dans lequel le noeud CP-RAN (230) comprend en outre des moyens pour envoyer au noeud UP-RAN une demande pour régler ou modifier un support radio de données, DRB, associé à l'UE (110), et dans lequel l'au moins un statut est reçu dans une réponse du noeud UP-RAN (240) à la demande.

5. Noeud CP-RAN (230) selon l'une des revendications 1 à 3, dans lequel le noeud CP-RAN (230) comprend en outre des moyens pour envoyer au noeud UP-RAN (240) une demande pour régler ou modifier un support radio de données, DRB, associé à l'UE (110), dans lequel la demande comprend des informations de configuration pour l'au moins un type de compression d'en-tête en se basant en partie sur l'au moins un statut respectif, et dans lequel l'au moins un statut a été reçu du noeud UP-RAN (240) avant l'envoi de la demande.

6. Noeud CP-RAN (230) selon la revendication 5, dans lequel l'au moins un statut indique si l'au moins un type respectif de compression d'en-tête pour le DRB est activé ou désactivé par le noeud UP-RAN (240).

7. Noeud CP-RAN (230) selon la revendication 5, dans lequel l'au moins un statut est un rapport de charge indiquant la charge du noeud UP-RAN en ce qui concerne la réalisation de l'au moins un type respectif de compression d'en-tête.

8. Noeud CP-RAN (230) selon la revendication 7, dans lequel le noeud CP-RAN (230) comprend en outre des moyens pour envoyer au noeud UP-RAN (240) une demande de rapport de charge ; et
dans lequel le rapport de charge est reçu du noeud UP-RAN (240) en réponse à la demande de rapport de charge.

9. Noeud de réseau d'accès radio de plan utilisateur, noeud UP-RAN (240), d'une unité centrale, CU, (210) d'un noeud RAN désagrégé (120), dans lequel la CU (210) comprend au moins le noeud UP-RAN (240) et un noeud RAN de plan de contrôle, CP, (230) ; le noeud UP-RAN (240) comprenant :
des moyens pour envoyer au noeud CP-RAN (230) au moins un statut indiquant la capacité du noeud UP-RAN à effectuer au moins un type respectif de compression d'en-tête, dans lequel l'au moins un statut indique si et/ou dans quelle mesure le noeud UP-RAN (240) a la capacité d'effectuer l'au moins un type respectif de compression d'en-tête en se basant en partie sur une charge des ressources du noeud UP-RAN pour effectuer une compression d'en-tête.

10. Noeud UP-RAN (240) selon la revendication 9, dans lequel l'au moins un statut indique si et/ou dans quelle mesure le noeud UP-RAN (240) a une capacité disponible pour effectuer l'au moins un type respectif de compression d'en-tête pour un support radio de données, DRB, en se basant en partie sur des ressources actuelles disponibles pour une compression d'en-tête dans le noeud UP-RAN (240).

11. Noeud UP-RAN (240) selon la revendication 9 ou 10, dans lequel l'au moins un type de compression d'en-tête comprend : un type de compression d'en-tête Ethernet et un type de compression d'en-tête IP ; et dans lequel l'au moins un statut comprend un premier statut pour le type de compression d'entête Ethernet et un deuxième statut pour le type de compression d'en-tête IP.

12. Noeud UP-RAN (240) selon l'une des revendications 9 à 11, dans lequel le noeud UP-RAN (240) comprend en outre des moyens pour recevoir du noeud CP-RAN (230) une demande pour régler ou modifier un support radio de données, DRB, associé à un équipement utilisateur, UE, (110), et dans lequel l'au moins un statut est envoyé au noeud CP-RAN (230) en réponse à la demande.

13. Noeud UP-RAN (240) selon l'une des revendications 9 à 11, dans lequel le noeud UP-RAN (240) comprend en outre des moyens pour recevoir du noeud CP-RAN (230) une demande pour régler ou modifier un support radio de données, DRB, associé à un équipement utilisateur, UE, (110), et dans lequel la demande comprend des informations de configuration pour l'au moins un type de compression d'en-tête en se basant en partie sur l'au moins un statut respectif, et dans lequel l'au moins un statut est envoyé au noeud CP-RAN (230) avant la réception de la demande.

14. Noeud UP-RAN (240) selon la revendication 13, dans lequel l'au moins un statut indique si l'au moins un type respectif de compression d'en-tête pour le DRB est activé ou désactivé par le noeud UP-RAN (240).

15. Noeud UP-RAN (240) selon la revendication 13, dans lequel l'au moins un statut est un rapport de charge indiquant la charge du noeud UP-RAN en ce qui concerne la réalisation de l'au moins un type respectif de compression d'en-tête.

16. Noeud UP-RAN (240) selon la revendication 15, dans lequel le noeud UP-RAN comprend en outre des moyens pour recevoir du noeud CP-RAN (230) une demande de rapport de charge ; et
dans lequel le rapport de charge est envoyé au noeud CP-RAN (230) en réponse à la demande de rapport de charge.

17. Procédé (300) à utiliser dans un noeud de réseau d'accès radio de plan de contrôle, noeud CP-RAN, (230) d'une unité centrale, CU, (210) d'un noeud RAN désagrégé (120), dans lequel la CU (210) comprend au moins le noeud CP-RAN (230) et un noeud RAN de plan utilisateur, UP, (240) ; le procédé comprenant les étapes suivantes :
recevoir (301), du noeud UP-RAN (240), au moins un statut indiquant la capacité du noeud UP-RAN à effectuer au moins un type respectif de compression d'en-tête, dans lequel l'au moins un statut indique si et/ou dans quelle mesure le noeud UP-RAN (240) a la capacité d'effectuer l'au moins un type respectif de compression d'en-tête en se basant en partie sur une charge des ressources du noeud UP-RAN pour effectuer une compression d'en-tête ; et
envoyer (302) des informations de configuration pour l'au moins un type de compression d'en-tête à un équipement utilisateur, UE, (110) en se basant en partie sur l'au moins un statut respectif.

18. Procédé (400) à utiliser dans un noeud de réseau d'accès radio de plan utilisateur, noeud UP-RAN, (240) d'une unité centrale, CU, (210) d'un noeud RAN désagrégé (120), dans lequel la CU (210) comprend au moins le noeud UP-RAN (240) et un noeud RAN de plan de contrôle, CP, (230) ; le procédé comprenant les étapes suivantes :
envoyer (401), au noeud CP-RAN (230), au moins un statut indiquant la capacité du noeud UP-RAN à effectuer au moins un type respectif de compression d'en-tête, dans lequel l'au moins un statut indique si et/ou dans quelle mesure le noeud UP-RAN (240) a la capacité d'effectuer l'au moins un type respectif de compression d'en-tête en se basant en partie sur une charge des ressources du noeud UP-RAN pour effectuer une compression d'en-tête.
